# EUROPÄISCHE PATENTSCHRIFT

(11) **EP 2 477 873 B1**
(45) Veröffentlichungstag und Bekanntmachung des Hinweises auf die Patenterteilung: **16.10.2013**
(21) Anmeldenummer: 10744567.8
(22) Anmeldetag: 13.08.2010
(51) Int. Cl.: B62D 15/02

(54) **VERFAHREN ZUM EINPARKEN EINES FAHRZEUGS**
METHOD FOR PARKING A VEHICLE
PROCÉDÉ POUR PARQUER UN VÉHICULE

(30) Priorität: 14.09.2009 DE 102009029436
(43) Veröffentlichungstag der Anmeldung: 25.07.2012
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2010/061826
(87) Internationale Veröffentlichungsnummer: WO 2011/029693

(56) Entgegenhaltungen:
- EP-A2- 1 839 999
- WO-A1-2005/118339
- DE-A1-102007 055 390

## Beschreibung

Die vorliegende Erfindung betrifft ein Verfahren zum Einparken eines Fahrzeugs in eine Parklücke an einer Fahrbahn beziehungsweise zum Ausparken eines Fahrzeugs aus einer Parklücke an einer Fahrbahn sowie ein Fahrerassistenzsystem zur Durchführung eines solchen Verfahrens

### Stand der Technik

Die Druckschrift EP 1 352 782 A2 beschreibt ein Parkassistentensystem, welches ein Bilderfassungsmittel, ein Display, ein Eingabemittel, ein Detektionsmittel zum Erfassen des relativen Verhältnisses zwischen dem Fahrzeug und der Zielparkposition und ein Bewertungsmittel, welches bewertet, ob das Fahrzeug an der Zielparkposition geparkt werden kann oder nicht, insbesondere um einen unnötigen Betrieb des Fahrzeugs zu verhindern. DE 10 2007 055390 A1 auch ein Parkassistentensystem nach dem Oberbegriff des Anspruchs 1.

### Offenbarung der Erfindung

Gegenstand der vorliegenden Erfindung ist ein Verfahren zum Einparken eines Fahrzeugs in eine Parklücke an einer Fahrbahn oder zum Ausparken eines Fahrzeugs aus einer Parklücke an einer Fahrbahn, umfassend die Verfahrensschritte:
a) Einstufen, ob an einer der Parklücke gegenüberliegenden Seite der Fahrbahn eine überfahrbare oder nicht überfahrbare Fläche vorliegt, und
b1) wenn die Fläche als nicht überfahrbar eingestuft wird: Ausführen einer ersten Bahnplanung zum Parken des Fahrzeugs, bei welcher das Überfahren der Fläche vermieden wird, und/oder
b2) wenn die Fläche als überfahrbar eingestuft wird: Ausführen der ersten Bahnplanung zum Parken des Fahrzeugs oder einer zweiten Bahnplanung zum Parken des Fahrzeugs, bei welcher das Überfahren der Fläche erlaubt wird.

Dabei wird unter dem Begriff "überfahren" insbesondere sowohl der direkte Kontakt mit der Fläche beim "Befahren" als auch das indirekte "Überstreichen" der Fläche beim Ausscheren eines Fahrzeugsbereichs verstanden.

Unter dem Begriff "überfahrbar" wird insbesondere verstanden, dass das Überfahren den Verkehr nicht wesentlich stört und/oder die Insassen des Fahrzeugs und/oder andere Verkehrsteilnehmer durch das Überfahren nicht wesentlich gefährdet werden. Flächen auf denen die Verkehrsdichte gering, insbesondere geringer als auf öffentlichen Strassen, ist und/oder auf denen die Verkehrsgeschwindigkeit gering, insbesondere geringer als auf öffentlichen Strassen, ist und/oder auf denen die Gefährdung gering, insbesondere geringer als auf öffentlichen Strassen ist und/oder auf denen Verkehrsteilnehmer in der Regel eine Störung durch ein Ausscheren/Überfahren tolerieren und/oder auf denen Verkehrsteilnehmer in der Regel mit einem Ausscheren/Überfahren rechnen und/oder die üblicherweise nicht durch andere Verkehrsteilnehmer genutzt werden, zum Beispiel eine Gegenfahrbahn auf einem Parkplatz oder ein erweiterter Fahrbahnbereich einer Einbahnstrasse, können beispielsweise als überfahrbar eingestuft werden.

Umgekehrt wird unter dem Begriff "nicht überfahrbar" insbesondere verstanden, dass das Überfahren den Verkehr wesentlich stört und/oder die Insassen des Fahrzeugs und/oder andere Verkehrsteilnehmer durch das Überfahren wesentlich gefährdet werden. Flächen auf denen die Verkehrsdichte hoch ist und/oder die Verkehrsgeschwindigkeit hoch ist und/oder die Gefährdung hoch ist und/oder auf denen Verkehrsteilnehmer in der Regel eine Störung durch Ausscheren/Überfahren nicht tolerieren und/oder auf denen Verkehrsteilnehmer in der Regel mit einem Ausscheren/Überfahren nicht rechnen, zum Beispiel eine Gegenfahrbahn oder eine Parallelfahrbahn einer öffentlichen Straße, können beispielsweise als nicht überfahrbar eingestuft werden.

Dieses Verfahren hat den Vorteil, dass es eine umgebungsabhängige Auswahl einer auf die Umgebung optimierten Bahnplanung ermöglicht. Mit anderen Worten, das Verfahren ermöglicht eine Bahnplanungsanpassung in Abhängigkeit vom Parkort. So ermöglicht das Verfahren einerseits ein schnelles Einparken beziehungsweise Ausparken mit wenigen Zügen, wenn eine zur Parklücke gegenüberliegende Fläche als überfahrbar eingestuft wird. Andererseits erhöht das Verfahren die Sicherheit der Insassen des Fahrzeugs und anderer Verkehrsteilnehmer, in dem das Überfahren einer zur Parklücke gegenüberliegende Fläche vermieden wird, wenn diese als nicht überfahrbar eingestuft wird. Dadurch kann vorteilhafterweise ein sicheres Einparken in eine Parklücke, insbesondere eine Querparklücke, garantiert werden, ohne andere Verkehrsteilnehmer zu stören.

Im Rahmen einer Ausführungsform der Erfindung erfolgt das Einstufen, ob eine überfahrbare oder nicht überfahrbare Fläche vorliegt, anhand von Daten, insbesondere Positionsdaten und Karteninformationen, eines satellitengestützten Positionsbestimmungssystems, beispielsweise GPS (global positioning system) oder Galileo, insbesondere Navigationssystems.

Im Rahmen einer weiteren Ausführungsform der Erfindung wird eine Fläche als nicht überfahrbar eingestuft, wenn es sich dabei um eine Gegenfahrbahn auf einer öffentlichen Straße oder um eine Parallelfahrbahn auf einer öffentlichen Straße handelt.

Im Rahmen einer weiteren Ausführungsform der Erfindung wird eine Fläche als überfahrbar eingestuft, wenn es sich dabei um die Gegenfahrbahn auf einem Parkplatz, insbesondere in einem Parkhaus oder in einer Tiefgarage, oder um einen erweiterten Fahrbahnbereich bei einer Einbahnstrasse handelt.

Im Rahmen einer weiteren Ausführungsform der Erfindung ist die Parklücke eine Querparklücke. Dabei wird unter einer "Querparklücke" insbesondere eine Parklücke verstanden, deren Längsachse senkrecht zur Längsachse der Fahrbahn angeordnet ist. Vorteilhafterweise ist das Verfahren insbesondere für das Parken in Querparklücken geeignet, welches eine besonders große laterale Fläche zum Ein- und Ausparken benötigt.

Im Rahmen einer weiteren Ausführungsform der Erfindung werden entsprechend der jeweiligen Bahnplanung Lenkanweisungen an den Fahrer ausgegeben und/oder eine automatische Lenkradsteuerung aktiviert und/oder ein Bremsassistent aktiviert.

Im Rahmen einer weiteren Ausführungsform der Erfindung umfasst die erste Bahnplanung mehr Rangierzüge als die zweite Bahnplanung.

Im Rahmen einer weiteren Ausführungsform der Erfindung umfasst die erste Bahnplanung längere Rangierzüge als das zweite Bahnplanungsmodell.

Ein weiterer Gegenstand der vorliegenden Erfindung ist ein Fahrerassistenzsystem zur Durchführung eines erfindungsgemäßen Verfahrens, umfassend
- ein satellitengestütztes Positionsbestimmungssystem, beispielsweise GPS (global positioning system) oder Galileo, insbesondere ein Navigationssystem,
- eine Auswertungs- und Steuervorrichtung zum Auswerten von vom satellitengestützten Positionsbestimmungssystem ausgegebenen Daten und zum Steuern einer optischen und/oder akustische Ausgabevorrichtung zum Ausgeben von Lenkanweisungen an den Fahrer des Fahrzeugs und/oder einer automatischen Lenkradsteuerung und/oder eines Bremsassistenten.

Insbesondere kann es sich bei dem Fahrerassistenzsystem um ein Parksystem, beispielsweise zum Einparken eines Fahrzeugs in eine Parklücke an einer Fahrbahn oder zum Ausparken eines Fahrzeugs aus einer Parklücke an einer Fahrbahn, zum Beispiel ein Einparksystem, handeln.

### Zeichnungen

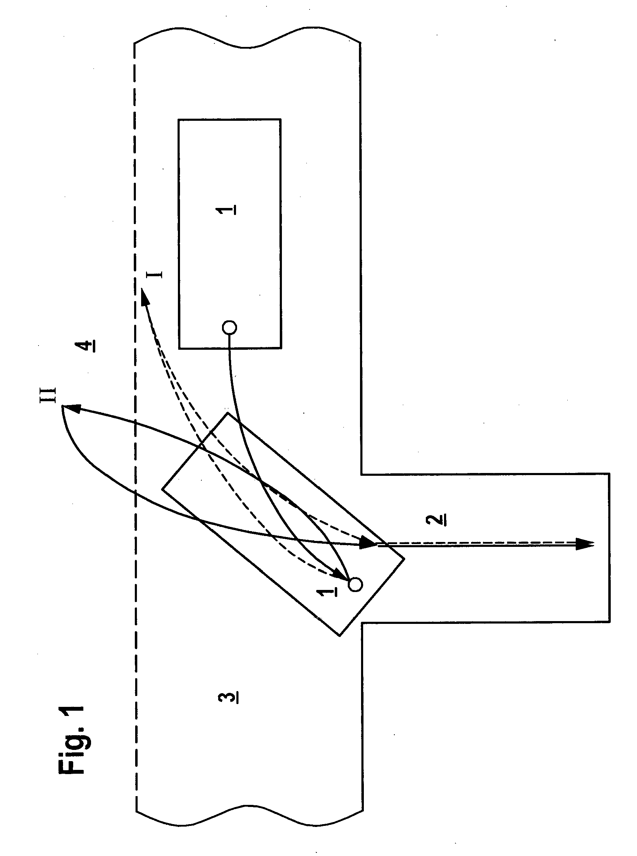

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
Fig. 1 eine schematische Draufsicht auf ein Fahrzeug beim Einparken in eine Parklücke an einer Fahrbahn unter Ausführung einer ersten Bahnplanung und einer zweiten Bahnplanung.

Figur 1 zeigt ein Fahrzeug 1 beim Einparken in eine Querparklücke 2 an einer Fahrbahn. Figur 1 illustriert, dass an einer der Parklücke 2 gegenüberliegenden Seite der Fahrbahn 3 eine Fläche 4 vorliegt, die sowohl überfahrbar als auch nicht überfahrbar sein kann.

Figur 1 illustriert, dass besonders das Einparken in Querparklücken 2 einen großen lateralen Raum 4 benötigt. Grundsätzlich sind dabei desto weniger Rangierzüge notwendig, um so weiter das Fahrzeug 1 auf die gegenüberliegende Seite 4 eintauchen darf. Wie in Figur 1 veranschaulicht sind bei derartigen Einparkvorgängen II beziehungsweise Bahnplanungen II, die Rangierzüge im Wesentlichen vertikal zur Fahrbahn 3 ausgerichtet. Daher kann die Art von Einparkvorgang II beziehungsweise Bahnplanung II, bei der das Fahrzeug 1 die gegenüberliegende Fläche 4 überfahren darf, auch als vertikaler Einparkvorgang II beziehungsweise vertikale Bahnplanung II bezeichnet werden.

Figur 1 zeigt weiterhin, dass die Rangierzüge von Einparkvorgänge I beziehungsweise Bahnplanungen I, die auf ein Ausscheren auf die gegenüberliegende Seite 4 weitestgehend verzichten, im Wesentlichen horizontal zur Fahrbahn 3 ausgerichtet sind. Daher kann die Art von Einparkvorgang I beziehungsweise Bahnplanung I, bei der ein Überfahren der gegenüberliegenden Fläche 4 durch das Fahrzeug 1 vermieden wird, auch als horizontaler Einparkvorgang I beziehungsweise horizontale Bahnplanung I bezeichnet werden.

Bei der Fläche 4 kann es sich beispielsweise um eine Gegenfahrbahn oder eine Parallelfahrbahn einer öffentlichen Straße handeln. Hierbei könnte ein Überfahren dieser Fläche 4 zu einer enormen Verkehrsbehinderung führen und eine hohe Gefahr bergen, da andere Verkehrsteilnehmer oft nicht mit einem Ausscheren beziehungsweise Überfahren der Fläche 4 rechnen. Insbesondere könnte in diesem Fall ein Überfahren dieser Fläche 4 den Verkehr wesentlich stören und/oder sogar die Insassen des Fahrzeugs beziehungsweise andere Verkehrsteilnehmer, wie Insassen von auf der Gegenfahrbahn oder der Parallelfahrbahn befindlichen Fahrzeugen, wesentlich gefährden. Daher kann eine derartige Fläche 4 insbesondere als nicht überfahrbar eingestuft werden.

Bei der Fläche 4 kann es sich jedoch auch um die Gegenfahrbahn auf einem Parkplatz, insbesondere in einem Parkhaus oder in einer Tiefgarage, oder um einen erweiterten Fahrbahnbereich bei einer Einbahnstrasse handeln. Hierbei würde der Verkehr auf dem Parkplatz beziehungsweise der Einbahnstraße nicht wesentlich gestört, da an diesen Orten die Verkehrsdichte in der Regel ein Vielfaches kleiner als auf öffentlichen Strassen ist, die Geschwindigkeit und damit die Gefährdung in der Regel niedriger als auf öffentlichen Strassen ist, Verkehrsteilnehmer in der Regel eine Störung durch ein Ausscheren auf die Gegenseite 4 tolerieren und/oder der erweiterten Fahrbahnbereich einer Einbahnstrasse üblicherweise nicht durch andere Verkehrsteilnehmer genutzt wird. Im Fall eines Parkplatzes oder eines erweiterten Fahrbahnbereiches einer Einbahnstrasse kann daher das Überfahren beziehungsweise Ausscheren auf die Gegenüberliegende Seite 4 in Kauf genommen werden. Daher kann eine derartige Fläche 4 insbesondere als überfahrbar eingestuft werden.

Im Rahmen des erfindungsgemäßen Verfahrens zum Einparken eines Fahrzeugs 1 in eine Parklücke 2 an einer Fahrbahn 3 oder zum Ausparken eines Fahrzeugs 1 aus einer Parklücke 2 an einer Fahrbahn 3 wird zunächst im Verfahrensschritt a) eingestuft, ob die gegenüberliegend zur Parklücke 2 an der Fahrbahn vorliegende Fläche 4 überfahrbar oder nicht überfahrbar ist.

Beispielsweise können GPS-Navigationsdaten hinsichtlich eindeutiger Merkmale, insbesondere der lateralen Befahrbarkeit, welche sich zum Beispiel im Fall einer öffentlichen zweispurigen Straße 4 und eines Parkplatzes 4 unterscheidet, ausgewertet werden. Basierend auf den GPS-Navigationsdaten kann anschließend ermittelt werden in wie weit ein Raum zur Navigation für Parklücken zur Verfügung steht. Dabei kann anhand der Karteninformation eine Unterscheidung zwischen gegenüberliegende Fläche 4 ist überfahrbar oder nicht überfahrbar getroffen werden.

In Abhängigkeit von dem Ergebnis der Einstufung wird anschließen eine an die Situation angepasste Bahnplanung I,II zum Parken des Fahrzeugs 1 ausgewählt und ausgeführt. So wird in Verfahrensschritt b1) eine erste Bahnplanung I, bei welcher das Überfahren der Fläche 4 vermieden wird, zum Parken des Fahrzeugs 1 ausgeführt, wenn die Fläche 4 in Verfahrensschritt a) als nicht überfahrbar eingestuft wurde und/oder im Verfahrensschritt b2) die erste Bahnplanung I oder einer zweiten Bahnplanung II, bei welcher das Überfahren der Fläche 4 erlaubt wird, zum Parken des Fahrzeugs 1 ausgeführt.

Befindet sich beispielsweise ein Fahrzeug 1 mit einer auf dem erfindungsgemäßen Verfahren basierten Parkunterstützung, insbesondere Querparkunterstützung, auf einem öffentlichen Parkplatz, einer Einbahnstrasse oder einer Tiefgarage so kann die zweite beziehungsweise vertikale Bahnplanung II angeboten werden. Dadurch kann ein schnelles Einparken in die Parklücke realisiert werden. Befindet sich das Fahrzeug hingegen auf einer öffentlichen Strasse, so kann, insbesondere nur, die erste beziehungsweise horizontale Bahnplanung I angeboten werden. Dadurch wird ein sicheres Einparken in eine Parklücke, insbesondere Querparklücke garantiert, ohne andere Verkehrsteilnehmer zu stören und/oder zu gefährden.

Entsprechend der jeweiligen Bahnplanung I,II können anschließend Lenkanweisungen an den Fahrer ausgegeben und/oder eine automatische Lenkradsteuerung aktiviert und/oder ein Bremsassistenten aktiviert werden.

Figur 1 veranschaulicht weiterhin, dass die erste Bahnplanung I längere Einzelzüge, insbesondere Rangierzüge, benötigen kann als die zweite Bahnplanung II. Die Anzahl der Rangierzüge der ersten I und zweiten II Bahnplanung ist im Rahmen des in Figur 1 gezeigten Beispiels jedoch gleich und entspricht der Zahl 1.

## Patentansprüche

1. Verfahren zum Einparken eines Fahrzeugs (1) in eine Parklücke (2) an einer Fahrbahn (3) und/oder zum Ausparken eines Fahrzeugs (1) aus einer Parklücke (2) an einer Fahrbahn (3), umfassend die Verfahrensschritte:
a) Einstufen, ob an einer der Parklücke (2) gegenüberliegenden Seite der Fahrbahn (3) eine überfahrbare oder nicht überfahrbare Fläche (4) vorliegt, und
b1) wenn die Fläche (4) als nicht überfahrbar eingestuft wird: Ausführen einer ersten Bahnplanung (I) zum Parken des Fahrzeugs (1), bei welcher das Überfahren der Fläche (4) vermieden wird, oder
b2) wenn die Fläche (4) als überfahrbar eingestuft wird: Ausführen der ersten Bahnplanung (I) zum Parken des Fahrzeugs (1) oder einer zweiten Bahnplanung (II) zum Parken des Fahrzeugs (1), bei welcher das Überfahren der Fläche (4) erlaubt wird,
**dadurch gekennzeichnet, dass** die Fläche (4) als überfahrbar eingestuft wird, wenn das Überfahren den Verkehr nicht wesentlich stört und/oder die Insassen des Fahrzeugs (1) und/oder andere Verkehrsteilnehmer durch das Überfahren nicht wesentlich gefährdet werden, und dass
das Überfahren der Fläche (4) sowohl den direkten Kontakt mit der Fläche (4) beim Befahren als auch das indirekte Überstreichen der Fläche (4) beim Ausscheren eines Fahrzeugbereichs umfasst.

2. Verfahren nach Anspruch 1, **dadurch gekennzeichnet, dass** das Einstufen, ob eine überfahrbare oder nicht überfahrbare Fläche (4) vorliegt, anhand von Daten, insbesondere Positionsdaten und Karteninformationen, eines satellitengestützten Positionsbestimmungssystems, beispielsweise GPS (global positioning system) oder Galileo, insbesondere Navigationssystems, erfolgt.

3. Verfahren nach Anspruch 1 oder 2, **dadurch gekennzeichnet, dass** eine Fläche (4) als nicht überfahrbar eingestuft wird, wenn es sich dabei um eine Gegenfahrbahn auf einer öffentlichen Straße oder um eine Parallelfahrbahn auf einer öffentlichen Straße handelt.

4. Verfahren nach einem der Ansprüche 1 bis 3, **dadurch gekennzeichnet, dass** eine Fläche (4) als überfahrbar eingestuft wird, wenn es sich dabei um die Gegenfahrbahn auf einem Parkplatz oder um einen erweiterten Fahrbahnbereich bei einer Einbahnstrasse handelt.

5. Verfahren nach einem der Ansprüche 1 bis 4, **dadurch gekennzeichnet, dass** die Parklücke (2) eine Querparklücke ist.

6. Verfahren nach einem der Ansprüche 1 bis 5, **dadurch gekennzeichnet, dass** entsprechend der jeweiligen Bahnplanung (I,II) Lenkanweisungen an den Fahrer ausgegeben werden und/oder eine automatische Lenkradsteuerung aktiviert wird und/oder ein Bremsassistenten aktiviert wird.

7. Verfahren nach einem der Ansprüche 1 bis 6, **dadurch gekennzeichnet, dass** die erste Bahnplanung (I) mehr Rangierzüge als die zweite Bahnplanung (II) umfasst.

8. Verfahren nach einem der Ansprüche 1 bis 7, **dadurch gekennzeichnet, dass** die erste Bahnplanung (I) längere Rangierzüge als die zweite Bahnplanung (II) umfasst.

9. Fahrerassistenzsystem Durchführend eines Verfahrens nach einem der Ansprüche 1 bis 8, umfassend
- ein satellitengestütztes Positionsbestimmungssystem, und
- eine Auswertungs- und Steuervorrichtung zum Auswerten von vom satellitengestützten Positionsbestimmungssystem ausgegebenen Daten und zum Steuern einer optischen und/oder akustische Ausgabevorrichtung zum Ausgeben von Lenkanweisungen an den Fahrer des Fahrzeugs und/oder einer automatischen Lenkradsteuerung und/oder eines Bremsassistenten.

## Claims

1. Method for parking a vehicle (1) in a parking space (2) on a carriageway (3) and/or for removing a vehicle (1) from a parking space (2) on a carriageway (3), comprising the method steps:
a) categorizing whether a surface (4) which can be travelled on or a surface (4) which cannot be travelled on is present on a side of the carriageway (3) opposite the parking space (2), and
b1) if the surface (4) is categorized as not being able to be travelled on: execution of a first path planning operation (I) for parking the vehicle (1) in which travel on the surface (4) is avoided, or
b2) if the surface (4) is categorized as being able to be travelled on: execution of the first path planning operation (I) for parking the vehicle (1) or a second path planning operation (II) for parking the vehicle (1) in which travel on the surface (4) is permitted,
**characterized in that** the surface (4) is categorized as being able to be travelled on
if the travel on the surface does not significantly disrupt the traffic and/or the occupants of the vehicle (1) and/or other road users are not placed in significant danger by the travel on the surface, and **in that** the travel on the surface (4) comprises both direct contact with the surface (4) during the travel and indirectly touching the surface (4) as a part of the vehicle veers out.

2. Method according to Claim 1, **characterized in that** the categorization as to whether a surface (4) which can be travelled on or a surface (4) which cannot be travelled on is present is made on the basis of data, in particular position data and map data, of a satellite-supported position-determining system, for example GPS (Global Positioning System) or Galileo, in particular navigation system.

3. Method according to Claim 1 or 2, **characterized in that** a surface (4) is categorized as not being able to be travelled on if the surface is an oncoming carriageway on a public road or a parallel carriageway on a public road.

4. Method according to one of Claims 1 to 3, **characterized in that** a surface (4) is categorized as being able to be travelled on if the surface is the oncoming carriageway on a car park or an extended carriageway area on a one-way road.

5. Method according to one of Claims 1 to 4, **characterized in that** the parking space (2) is a transverse parking space.

6. Method according to one of Claims 1 to 5, **characterized in that**, depending on the respective path planning operation (I, II), steering instructions are output to the driver and/or an automatic steering wheel controller is activated and/or a braking assistant is actuated.

7. Method according to one of Claims 1 to 6, **characterized in that** the first path planning operation (I) comprises more manoeuvring operations than the second path planning operation (II).

8. Method according to one of Claims 1 to 7, **characterized in that** the first path planning operation (I) comprises longer manoeuvring operations than the second path planning operation (II).

9. Driver assistance system carrying out a method according to one of Claims 1 to 8, comprising
- a satellite-supported position-determining system, and
- an evaluation and control device for evaluating data which is output by the satellite-supported position-determining system, and for controlling an optical and/or acoustic output device for outputting steering instructions to the driver of the vehicle and/or an automatic steering wheel controller and/or a braking assistant.

## Revendications

1. Procédé de stationnement d'un véhicule (1) dans une place de stationnement (2) située au niveau d'une voie de circulation (3) et/ou de sortie de stationnement d'un véhicule (1) hors d'une place de stationnement (2) située au niveau d'une voie de circulation (3), comprenant les étapes de procédé suivantes :
a) catégorisation permettant de savoir de si un côté de la voie de circulation (3) opposé à la place de stationnement (2) dispose d'une surface (4) carrossable ou non carrossable ; et
b1) lorsque la surface (4) est catégorisée comme non carrossable : réalisation d'une première planification de trajectoire (I) pour stationner le véhicule (1) dans laquelle on évite de mordre sur la surface (4) ; ou
b2) lorsque la surface (4) est catégorisée comme carrossable : réalisation de la première planification de trajectoire (I) pour stationner le véhicule (1) ou d'une deuxième planification de trajectoire (II) pour stationner le véhicule (1) dans laquelle il est permis de mordre sur la surface (4) ;
**caractérisé en ce que** :
la surface (4) est catégorisée comme carrossable lorsque le fait de mordre sur la surface n'entrave pas foncièrement la circulation et/ou que les occupants du véhicule (1) et/ou les personnes se trouvant alentour ne sont pas foncièrement mis en danger par cette action ; et
le fait de mordre sur la surface (4) comprend tant le contact direct avec la surface (4) lors de la manoeuvre que le survol indirect de la surface (4) lors du déboîtement d'une région du véhicule.

2. Procédé selon la revendication 1, **caractérisé en ce que** la catégorisation permettant de déterminer si une surface (4) est carrossable ou non carrossable est effectuée à l'aide de données, notamment de données de position et d'informations cartographiques, d'un système de géolocalisation par satellites, par exemple d'un GPS (global positioning system) ou d'un système de type Galileo, notamment d'un système de navigation.

3. Procédé selon la revendication 1 ou 2, **caractérisé en ce qu'**une surface (4) est catégorisée comme non carrossable lorsqu'il s'agit d'une voie opposée sur voie publique ou d'une voie de circulation parallèle sur voie publique.

4. Procédé selon l'une quelconque des revendications 1 à 3, **caractérisé en ce qu'**une surface (4) est catégorisée comme carrossable lorsqu'il s'agit d'une voie opposée sur une place de stationnement ou d'une zone de voie de circulation élargie dans une rue à sens unique.

5. Procédé selon l'une quelconque des revendications 1 à 4, **caractérisé en ce que** la place de stationnement (2) est une place de stationnement transversale.

6. Procédé selon l'une quelconque des revendications 1 à 5, **caractérisé en ce que** suivant la planification de trajectoire (I, II) respective, des indications de pilotage sont transmises au conducteur et/ou un système de pilotage automatique du volant de direction est activé et/ou un assistant de freinage est activé.

7. Procédé selon l'une quelconque des revendications 1 à 6, **caractérisé en ce que** la première planification de trajectoire (I) comprend plus de manoeuvres que la deuxième planification de trajectoire (II).

8. Procédé selon l'une quelconque des revendications 1 à 7, **caractérisé en ce que** la première planification de trajectoire (I) comprend des manoeuvres plus longues que la deuxième planification de trajectoire (II).

9. Système d'aide à la conduite utilisant un procédé selon l'une quelconque des revendications 1 à 8, comprenant :
- un système de géolocalisation par satellites ; et
- un dispositif d'analyse et de commande permettant d'analyser les données transmises par le système de géolocalisation par satellites et de commander un dispositif d'émission optique et/ou acoustique permettant de transmettre des indications de pilotage au conducteur du véhicule et/ou à un système de pilotage automatique du volant de direction et/ou à un assistant de freinage.
